# EUROPÄISCHE PATENTSCHRIFT

(11) **EP 2 431 248 B1**
(45) Veröffentlichungstag und Bekanntmachung des Hinweises auf die Patenterteilung: **19.12.2012**
(21) Anmeldenummer: 10177003.0
(22) Anmeldetag: 16.09.2010
(51) Int. Cl.: B61D 17/10, B62D 25/20

(54) **Fußboden für ein Schienenfahrzeug**
Floor for a rail vehicle
Sol pour un véhicule sur rail

(43) Veröffentlichungstag der Anmeldung: 21.03.2012
(73) Patentinhaber: Wilhelm Wißmann GmbH, 46514 Schermbeck (DE)
(72) Erfinder: Wissmann, Johannes, 46325 Borken (DE); Wissmann, Wilhelm, 46514 Schermbeck (DE); Wissmann, Bernhard, 46284 Dorsten (DE)
(74) Vertreter: Zenz

(56) Entgegenhaltungen:
- EP-A2- 0 061 994
- US-A- 3 043 407
- US-A- 4 769 963
- US-A- 5 209 541
- US-A- 6 082 810
- US-A1- 2002 014 008

## Beschreibung

Die Erfindung betrifft einen Fußboden für ein Schienenfahrzeug mit mehreren Bodenplatten, die an benachbarten Seitenflächen miteinander verbunden sind.

Ein Fußboden mit den im Oberbegriff von Anspruch 1 definierten Merkmalen ist aus der US-A-6 082 810 bekannt.

Zur Herstellung von Fußböden für Schienenfahrzeuge ist es beispielsweise bekannt, mehrere Bodenplatten, die sich jeweils über die gesamte Breite des Schienenfahrzeugbodens erstrecken, an ihren Seitenflächen oder -rändern miteinander durch Klebe- oder Schraubverbindungen zu verbinden. Beispielsweise ist es bekannt, dass die Bodenplatten an den miteinander zu verbindenden Seitenflächen Falze oder Nut-Feder-Verbindungen aufweisen, die über einen Klebstoff miteinander verbunden werden. Aufgrund herstellungsbedingter Toleranzen ist es häufig erforderlich, zwischen den Platten verbleibende Spalte zu verspachteln. Die Herstellung eines solchen Schienenfahrzeug-Fußboden ist unter anderem auch deshalb zeitaufwändig, weil vor der Ausführung nachfolgender Installationsarbeiten ein Aushärten der Klebeverbindungen abzuwarten ist und weil bei der Herstellung der Klebeverbindung teilweise die miteinander zu verbindenden Seitenflächen der Bodenplatten nachzuarbeiten sind.

Es sind auch Fußböden bekannt, bei denen die Bodenplatten miteinander verschraubt werden, was ebenfalls einen zusätzlichen Zeitaufwand und entsprechende Werkzeuge erfordert.

Es ist Aufgabe der Erfindung, einen Fußboden für ein Schienenfahrzeug mit mehreren Bodenplatten zu schaffen, der eine schnelle Montage, insbesondere eine schnelle Verlegung und eine kurzfristige Begehbarkeit nach der Verlegung, gestattet.

Diese Aufgabe wird erfindungsgemäß durch einen Fußboden mit den Merkmalen des Anspruchs 1 gelöst. Der Fußboden für ein Schienenfahrzeug weist mehrere ebene Bodenplatten auf, die über ineinandergreifende Verbindungsprofilschienen verbunden sind. Eine erste Bodenplatte weist an einer ersten Seitenfläche eine sich horizontal erstreckende Nut auf, in der eine erste Verbindungsprofilschiene befestigt ist. Eine zweite, benachbarte Bodenplatte weist an einer der ersten Seitenfläche der ersten Bodenplatte zugewandten zweiten Seitenfläche eine sich horizontal erstreckende Nut auf, in der eine zweite Verbindungsprofilschiene befestigt ist. Eine im Wesentlichen horizontal vorspringende Feder der zweiten Verbindungsprofilschiene greift in eine sich horizontal erstreckende Nut der ersten Verbindungsprofilschiene ein, wobei die Feder und die Nut eine Nut-Feder-Klickverbindung bilden und Verriegelungsflächen derart aufweisen, dass nach dem Ineinandergreifen ein Formschluss der Verriegelungsflächen einer Relativbewegung der beiden Bodenplatten in horizontaler und vertikaler Richtung entgegensteht. An den oberen Rändern der einander zugewandten Seiten der Verbindungsprofilschienen sind Vorsprünge vorgesehen, die jeweils in einen über der Nut-Feder-Klickverbindung angeordneten Abschnitt eines Spalts zwischen den benachbart angeordneten Bodenplatten hineinragen und einander zugewandte vertikale Anschlagflächen aufweisen, die im verbundenen Zustand aneinander anliegen.

Vorteilhaft bei dem erfindungsgemäßen Schienenfahrzeug-Fußboden ist es, dass die die Bodenplatten verbindende Nut-Feder-Verbindung nicht direkt aus dem Material der Bodenplatten herausgearbeitet wird, sondern dass in die einander zugewandten Seitenflächen der Bodenplatten Nuten eingebracht werden, die jeweils ineinandergreifende Verbindungsprofilschienen aufnehmen. Diese Verbindungsprofilschienen wiederum bilden eine Nut-Feder-Klickverbindung und haben an ihren oberen Rändern der einander zugewandten Seiten Vorsprünge, die einander zugewandte vertikale Anschlagflächen aufweisen. Durch diese vertikalen Anschlagflächen der Vorsprünge wird gesichert, dass die ineinandergreifenden Verbindungsprofilschienen eine fixe Relativposition einnehmen, die von möglichen Bearbeitungstoleranzen bei der Tiefe der Einbringung der Nuten in die Seitenflächen der Bodenplatten unabhängig ist. Außerdem verbessert das Ansetzen der Profilschienen an den zu verbindenden Rändern der Bodenplatten die Handhabung gegenüber Platten, bei denen das Profil aus dem Plattenmaterial herausgefräst wäre; die Kanten sind bei StoßBeanspruchungen während der Montage besser geschützt. Bei Multiplex-Bodenplatten aus einem Holzwerkstoff beispielsweise verringert dies die Gefahr von Abbrüchen. Die Konturen der Feder und der Nut der Verbindungsprofilschienen mit den Anschlagflächen und den Verriegelungsflächen gewährleisten eine genaue Fixierung durch eine selbstsichernde formschlüssige Verbindung, eine Fugendichtheit und eine hohe Passgenauigkeit der Verbindungselemente. Die Herstellung der Verbindung zwischen den Verbindungsprofilschienen ist auf einfache Weise durch Einschwenken der Feder in die Nut möglich, wobei keine zusätzlichen Werkzeuge benötigt werden. Dies ermöglicht eine schnelle Montage im Fahrzeug und gewährleistet eine sofortige Begehbarkeit der Flächen nach der Montage. Die Nut-Feder-Klickverbindung ist mit geringen Toleranzmaßen herstellbar, so dass sich eine hohe Passgenauigkeit und eine Fugendichtheit sowie eine sichere Verbindung auch bei Schwingungsbeanspruchungen im Fahrzeug ergeben. Ein Verkleben der der Verbindung ist möglich, aber nicht erforderlich und vorzugsweise auch nicht erwünscht. Durch Wegfall der Klebeverbindung ist auch eine Montage der Bodenplatten mit bereits aufgeklebten Bodenbelägen möglich. Auch dies führt zu einer weiteren Zeitersparnis bei der Montage. Außerdem können die Nut-Feder-Klickverbindungen den bei den Schienenfahrzeugen auftretenden Stoß- und Schwingungsbelastungen (z.B. Fahrzeugbeschleunigungen, Aufnahme der Sitze) besser standhalten. Klebeverbindungen zwischen den Bodenplatten können reißen. Auch durch Temperaturunterschiede bedingte Ausdehnungsbewegungen nimmt der erfindungsgemäße Fußboden, der teilweise schwimmend verlegt sein kann, besser auf

Bei einer bevorzugten Ausführungsform weisen die Vorsprünge horizontale obere Begrenzungsflächen auf, die bei miteinander verbundenen Bodenplatten in einer horizontalen Ebene liegen, die im Wesentlichen in der Ebene der Oberflächen der Bodenplatten liegt. "Im Wesentlichen" bedeutet hier, dass es - bedingt durch Toleranzen bei der Fertigung - geringfügige Höhenunterschiede zwischen der aus den oberen Begrenzungsflächen gebildeten Ebene und der durch die Oberflächen der Bodenplatten gebildeten Ebene geben kann. Deshalb ist der Fußboden vorzugsweise dadurch gekennzeichnet, dass die horizontalen oberen Begrenzungsflächen derart angeordnet sind, dass sie dann, wenn die Verbindungsprofilschienen in einer Soll-Position in den Bodenplatten befestigt sind, geringfügig derart gegenüber der Oberfläche der Bodenplatten zurückgesetzt sind, dass Abweichungen von der Soll-Position aufgrund von Toleranzen der Anordnung der Nuten in den Bodenplatten und Toleranzen der Verbindungsprofilschienen nicht dazu führen, dass die oberen Begrenzungsflächen der Verbindungsprofilschienen über die Oberfläche der Bodenplatten hinausragen. Die bei dieser Ausführungsform möglicherweise entstehenden geringfügigen Absenkungen in den Verbindungsspalten können nach der Montage durch eine Fugenversiegelung ausgeglichen werden.

Eine bevorzugte Weiterbildung des erfindungsgemäßen Fußbodens ist dadurch gekennzeichnet, dass die aneinander anliegenden Vorsprünge den oberen Abschnitt des Spalts zwischen den benachbart angeordneten Bodenplatten vollständig ausfüllen. Diese Ausführungsform gewährleistet eine spaltfreie, ebene Oberfläche des Fußbodens bereits nach bloßem Aneinandersetzten der Verbindungsprofilschienen der Bodenplatten.

Vorzugsweise sind die Verbindungsprofilschienen durch Einkleben in die Nuten der Bodenplatten befestigt. Eine bevorzugte Ausführungsform ist hierbei dadurch gekennzeichnet, dass die Verbindungsprofilschienen in ihren dem Nutboden zugewandten Flächen Ausnehmungen zur Aufnahme überschüssigen Klebstoffs aufweisen. Dies vereinfacht die Herstellung der mit den Verbindungsprofilschienen versehenen Bodenplatten.

Bei einer bevorzugten Ausführungsform weisen die Verbindungsprofilschienen abgerundete Konturen auf, so dass die Gefahr von Kerbrissen gemindert ist. Die Verbindungsprofilschienen sind vorzugsweise aus einem festen Kunststoffmaterial oder aus einem Metall, insbesondere aus Aluminium oder einer Aluminiumlegierung, durch Stranggießen gefertigt. Auch dies vereinfacht die Herstellung. Die Bodenplatten sind beispielsweise Multiplex-Sperrholzplatten, Kunststoffplatten oder Verbundplatten.

Vorteilhafte und/oder bevorzugte Weiterbildungen der Erfindung sind in den Unteransprüchen gekennzeichnet. Im Folgenden wird die Erfindung anhand einer in den Zeichnungen dargestellten bevorzugten Ausführungsform näher erläutert. In den Zeichnungen zeigen:
Figuren 1A und 1B: eine schematische Darstellung bzw. eine schematische Schnittansicht jeweils eines Ausschnitts zweier miteinander zu verbindender Bodenplatten, die an den einander zugewandten Seitenflächen mit den komplementären Verbindungsprofilschienen versehen sind, vor dem Verbinden der Bodenplatten;
Figuren 2A und 2B: schematische Ansichten der in den Figuren 1A und 1B dargestellten Ausschnitte der zu verbindenden Bodenplatten nach deren Verbindung;
Figuren 3A und 3B: eine Perspektivansicht und eine Schnittansicht der eine Feder aufweisenden Verbindungsprofilschiene; und
Figuren 4A und 4B: eine Perspektivansicht und eine Schnittansicht der eine Nut aufweisenden Verbindungsprofilschiene.

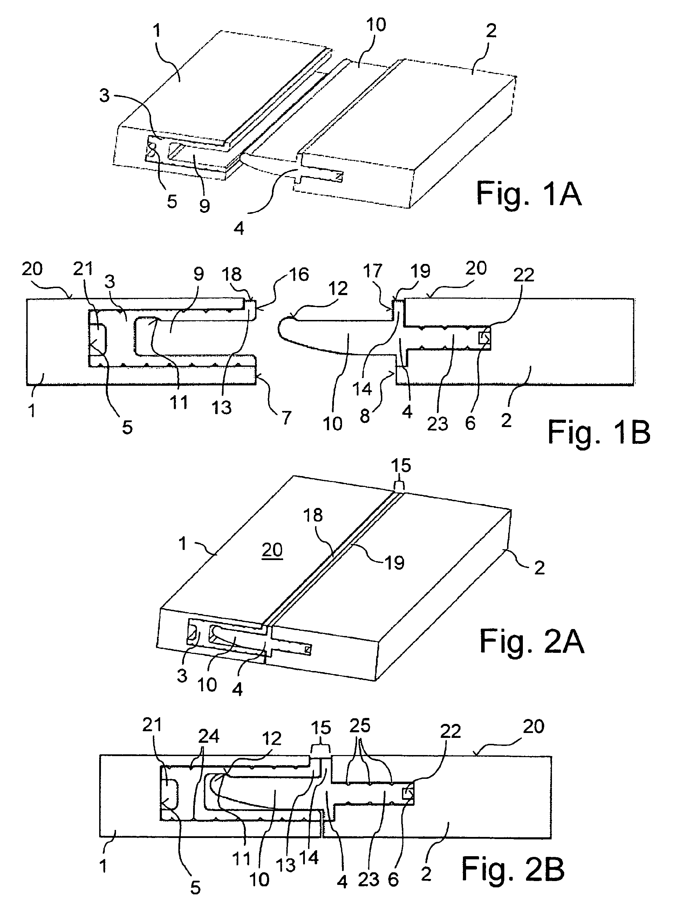

Figur 1A zeigt eine schematische Perspektivansicht von Ausschnitten zweier miteinander zu verbindender Bodenplatten 1, 2. Eine erste Bodenplatte 1 weist eine Nut 5 auf, in die eine erste Verbindungsprofilschiene 3 eingesetzt ist, wobei die erste Verbindungsprofilschiene 3 eine Nut 9 aufweist. In eine seitliche Nut einer zweiten Bodenplatte 2 ist eine zweite Verbindungsprofilschiene 4 eingesetzt, wobei die zweite Verbindungsprofilschiene 4 eine Feder 10 aufweist, die in die Nut 9 der ersten Verbindungsprofilschiene 3 einsteckbar ist.

Figur 1B zeigt eine schematische Schnittansicht der in Figur 1A gezeigten Ausschnitte der beiden Bodenplatten 1, 2. Die Bodenplatte 1 weist eine erste Seitenfläche 7 und einer (nicht dargestellte) gegenüberliegende zweite Seitenfläche auf. Die Nut 5 ist horizontal in die erste Seitenfläche 7 eingebracht. In die Nut 5 ist die erste Verbindungsprofilschiene 3 eingesetzt und mit einer Klebstoffverbindung befestigt. Der Klebstoff wird hierzu auf die Verbindungsprofilschiene 3 oder in die Nut 5 eingebracht, wobei anschließend die Verbindungsprofilschiene 3 in die Nut 5 eingeschoben wird. Eine Ausnehmung 21 der Verbindungsprofilschiene 3 dient hierbei zur etwaigen Aufnahme überschüssigen Klebstoffs. Zur besseren Befestigung der Verbindungsprofilschiene 3 weist diese an den an der Nutwandung anliegenden Oberflächen weitere Vertiefungen oder Querrillen auf. Die Verbindungsprofilschiene 3 mit der Nut 9 ist in spezieller Weise für eine Nut-Feder-Klickverbindung ausgebildet. Insbesondere weist die Verbindungsprofilschiene 3 einen nach oben in einen Spalt zwischen den zu verbindenden Bodenplatten 1, 2 hineinragenden Vorsprung 13 auf. Der Vorsprung 13 wiederum weist eine vertikale Anschlagfläche 16 und eine horizontale obere Begrenzungsfläche 18 auf.

In eine Nut 6 der zweiten Bodenplatte 2 ist eine komplementäre Verbindungsprofilschiene 4 eingesetzt und ebenfalls durch eine Klebstoffverbindung befestigt, wobei auch hier eine Ausnehmung 22 zur Aufnahme überschüssigen Klebstoffs dient. Die Verbindungsprofilschiene 4 weist eine Feder 10 auf, die in die Nut 9 der Verbindungsprofilschiene 3 der ersten Bodenplatte 1 eingreifen kann. Auch die Verbindungsprofilschiene 4 weist einen nach oben in den Spalt zwischen den zu verbindenden Bodenplatten 1, 2 hineinragenden Vorsprung 14 mit einer vertikalen Anschlagfläche 17 und einer horizontalen oberen Begrenzungsfläche 19 auf. In Figur 1B sind die horizontalen oberen Begrenzungsflächen 18, 19 der beiden Verbindungsprofilschienen 3, 4 gegenüber der Oberfläche 20 der Bodenplatten 1, 2 nach unten geringfügig zurückgesetzt dargestellt. Die Darstellung ist aus Gründen der Veranschaulichung geringfügig übertrieben. Tatsächlich sind die oberen Begrenzungsflächen 18, 19 der Verbindungsprofilschienen 3, 4 bei der bevorzugten Ausführungsform derart angeordnet, dass sie im Wesentlichen in der Ebene der Oberflächen 20 der Bodenplatten 1, 2 liegen. Sie sind so angeordnet, dass sie dann, wenn die Verbindungsprofilschienen 3, 4 in einer Soll-Position in den Bodenplatten 1, 2 befestigt sind, geringfügig derart gegenüber der Oberfläche 20 der Bodenplatten 1, 2 zurückgesetzt sind, dass Abweichungen von der Soll-Position aufgrund von Toleranzen der Anordnung der Nuten 5, 6 in den Bodenplatten und der Verbindungsprofilschienen 3, 4 nicht dazu führen können, dass die oberen Begrenzungsflächen 18 und 19 der Verbindungsprofilschienen 3, 4 über die Oberfläche 20 der Bodenplatten 1, 2 hinausragen.

Die Nut 9 der Verbindungsprofilschiene 3 weist eine Verriegelungsfläche 11 auf, und die Feder 10 der Verbindungsprofilschiene 4 weist eine entsprechende Verriegelungsfläche 12 auf. Das Ineinandergreifen der beiden Verbindungsprofilschienen 3, 4 ist in den Figuren 2A und 2B dargestellt. Figuren 2A und 2B zeigen schematische Ansichten der in den Figuren 1A und 1B dargestellten Ausschnitte der Bodenplatten 1, 2 nach deren Verbindung. Um die beiden Bodenplatten 1, 2 miteinander zu verbinden, wird die Feder 10 der Verbindungsprofilschiene 4 der Bodenplatte 2 in die Nut 9 der Verbindungsprofilschiene 3 der Bodenplatte 1 eingeführt, wobei zunächst die Bodenplatte 2 nach oben angewinkelt eingeführt und beim Hintergreifen der Verriegelungsfläche 12 hinter die Verriegelungsfläche 11 abgesenkt wird. Dabei stößt die vertikale Anschlagfläche 17 der Verbindungsprofilschiene 4 an die vertikale Anschlagfläche 16 der Verbindungsprofilschiene 3. Die Breite der Feder 10 (d. h. die vertikale Abmessung in den Figuren 1A bis 2B) entspricht am Ansatz der Feder der Breite der Nut 9 der Verbindungsprofilschiene 3 an der Seitenfläche 7 der Bodenplatte 1. Zu ihrem der Bodenplatte 1 zugewandten Ende hin verjüngt sich die Feder 10 bogenförmig, so dass ein Einschieben der Feder 10 in die Nut 9 bei einer nach oben angewinkelten Bodenplatte 2 ermöglicht wird. Die Breite der Feder, die Krümmung der Verjüngung der Feder 10, die Ausbildung der Verriegelungsflächen 11 und 12 der Feder 10 bzw. der Nut 9 und die Anordnung der Anschlagflächen 17 und 16 der Vorsprünge 14 bzw. 13 sind dabei so gewählt, dass einerseits ein einfaches manuelles Einschieben der Feder 10 in die Nut 9 ermöglicht wird und andererseits nach dem Ineinandergreifen der Nut-Feder-Verbindung ein Formschluss der Verriegelungsflächen 11, 12 einer Relativbewegung der beiden Bodenplatten in horizontaler und vertikaler Richtung entgegensteht. Das Hintergreifen der Verriegelungsfläche 12 der Feder 10 hinter die Verriegelungsfläche 11 der Nut 9 verhindert, dass die Verbindungsprofilschiene 4 der Bodenplatte 2 horizontal aus der Nut 9 der Verbindungsprofilschiene 3 der Bodenplatte 1 herausgezogen werden kann. Zugleich verhindert die Breite der Feder 10 an ihrem Ansatz, die der Breite der Nut 9 entspricht, eine vertikale Relativbewegung der beiden Verbindungsprofilschienen 3, 4 bzw. der Bodenplatten 1, 2.

Im zusammengesetzten Zustand füllen die mit ihren Anschlagflächen 16 und 17 aneinanderliegenden Vorsprünge 13 und 14 den Spalt 15 zwischen den Bodenplatten 1 und 2 vollständig aus, wobei die oberen Begrenzungsflächen 18 und 19 der Vorsprünge 13 und 14 in einer Ebene liegen, die im Wesentlichen in der Ebene der Oberflächen 20 der Bodenplatten 1 und 2 liegt. Wie in Figur 2B zu erkennen ist, braucht der Spalt zwischen den Bodenplatten 1 und 2 unterhalb der Verbindung zwischen der Feder 10 und der Nut 9 nicht geschlossen zu sein; ein dichter Abschluss der Fuge zwischen den beiden Bodenplatten 1 und 2 wird durch den formschlüssigen oberen Abschnitt der Nut-Feder-Verbindung zwischen den Verbindungsprofilschienen 3 und 4 erreicht.

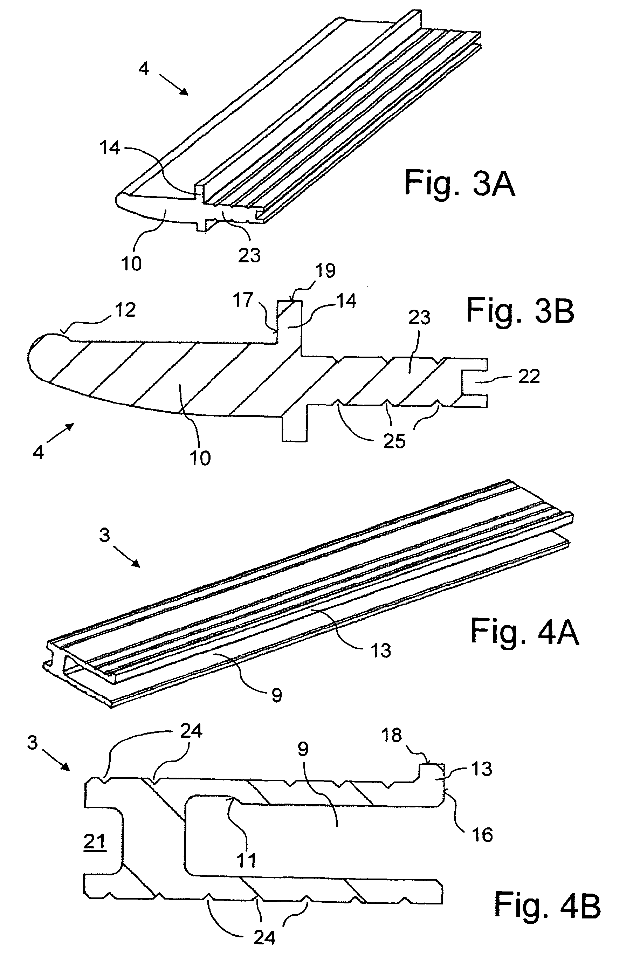

Die Figur 3A zeigt die mit der Feder 10 versehene Verbindungsprofilschiene 4 in perspektivischer schematischer Ansicht, wobei Figur 3B eine Schnittansicht dieser Profilschiene 4 zeigt. Die Figuren 4A und 4B zeigen eine entsprechende schematische Perspektivansicht und eine Schnittansicht der die Nut 9 aufweisenden Verbindungsprofilschiene 3.

In den Figuren 3A bis 4B sind die bereits anhand der Figuren 1A bis 2B beschriebenen Elemente der Verbindungsprofilschienen 3 und 4 deutlicher zu erkennen, so unter anderem bei der Verbindungsprofilschiene 4 die Verriegelungsfläche 12 der Feder 10, die vertikale Anschlagfläche 17 und die obere Begrenzungsfläche 19 des Vorsprungs 14 und die Ausnehmung 22 sowie die Profilrillen 25 des in die Nut der Bodenplatte einzusetzenden Abschnitts 23. In Figur 4B sind die Elemente der Verbindungsprofilschiene 3 deutlicher zu erkennen, nämlich die Verriegelungsfläche 11 in der Nut 9, die vertikale Anschlagfläche 16 und die obere Begrenzungsfläche 18 des Vorsprungs 13 und die Ausnehmung 21 und die Profilrillen 24 der an der Innenwandung der Nut der Bodenplatte anliegenden Außenflächen der Verbindungsprofilschiene 3.

Bei alternativen Ausführungsbeispielen ist es denkbar, dass anstelle der gezeigten Nut-Feder-Verbindung eine andere geeignete Klickverbindung gewählt wird, bei der die Verriegelungsflächen an einer anderen Stelle der Nut-Feder-Verbindung positioniert sind. Wesentlich ist hierbei lediglich, dass die Ausbildung der Nut-Feder-Klickverbindung ein einfaches Einsetzen oder Einschwenken der einen Bodenplatte in die benachbarte ermöglicht, aber in der endgültigen Position sowohl ein horizontales Herausziehen als auch eine vertikale Relativbewegung verhindert werden. Es sind auch Nut-Feder-Klickverbindungen denkbar, bei denen sowohl die erste Verbindungsprofilschiene 3 als auch die zweite Verbindungsprofilschiene 4 jeweils eine Nut und eine Feder aufweisen, die vertikal versetzt sind, wobei die Verriegelungsflächen an dem Übergang zwischen einer unteren Nut-Feder-Verbindung und einer darüber angeordneten, oberen Nut-Feder-Verbindung positioniert sein können.

Bei dem bevorzugten Ausführungsbeispiel sind die Verbindungsprofilschienen aus Aluminium oder einer Aluminiumlegierung durch Strangziehen hergestellt. Bei alternativen Ausführungsformen könnten Sie auch aus Kunststoff hergestellt sein. Die Bodenplatten selbst sind vorzugsweise aus Multiplex-Sperrholzplatten (zum Beispiel Birke Multiplex), Kunststoffplatten (zum Beispiel Monocore) oder Verbundplatten hergestellt.

## Patentansprüche

1. Fußboden für ein Schienenfahrzeug mit
mehreren ebenen Bodenplatten (1, 2), die über ineinandergreifende Verbindungsprofilschienen (3, 4) verbunden sind,
wobei eine erste Bodenplatte (1) an einer ersten Seitenfläche (7) eine sich horizontal erstreckende Nut (5) aufweist, in der eine erste Verbindungsprofilschiene (3) befestigt ist,
eine zweite, benachbarte Bodenplatte (2) an einer der ersten Seitenfläche (7) der ersten Bodenplatte (1) zugewandten zweiten Seitenfläche(8) eine sich horizontal erstreckende Nut (6) aufweist, in der eine zweite Verbindungsprofilschiene (4) befestigt ist, **dadurch gekennzeichnet dass**
eine im Wesentlichen horizontal vorspringende Feder (10) der zweiten Verbindungsprofilschiene (4) in eine Nut (9) der ersten Verbindungsprofilschiene (3) eingreift, wobei die Feder (10) und die Nut (9) eine Nut-Feder-Klickverbindung bilden und Verriegelungsflächen (11, 12) derart aufweisen, dass nach dem Ineinandergreifen ein Formschluss der Verriegelungsflächen (11, 12) einer Relativbewegung der beiden Bodenplatten in horizontaler und vertikaler Richtung entgegensteht, und
wobei an den oberen Rändern der einander zugewandten Seiten der Verbindungsprofilschienen (3, 4) Vorsprünge (13, 14) vorgesehen sind, die jeweils in einen über der Nut-Feder-Klickverbindung angeordneten Abschnitt eines Spalts (15) zwischen den benachbart angeordneten Bodenplatten (1, 2) hineinragen und einander zugewandte vertikale Anschlagflächen (16, 17) aufweisen, die im verbundenen Zustand aneinander anliegen.

2. Fußboden nach Anspruch 1, **dadurch gekennzeichnet, dass** die Vorsprünge (13, 14) horizontale obere Begrenzungsflächen (18, 19) aufweisen, die bei miteinander verbundenen Bodenplatten (1, 2) in einer horizontalen Ebene liegen, die im Wesentlichen in der Ebene der Oberflächen (20) der Bodenplatten (1, 2) liegt.

3. Fußboden nach Anspruch 2, **dadurch gekennzeichnet, dass** die horizontalen oberen Begrenzungsflächen (18, 19) derart angeordnet sind, dass sie dann, wenn die Verbindungsprofilschienen (3, 4) in einer Soll-Position in den Bodenplatten (1, 2) befestigt sind, geringfügig derart gegenüber der Oberfläche (20) der Bodenplatten (1, 2) zurückgesetzt sind, dass Abweichungen von der Soll-Position aufgrund von Toleranzen der Anordnung der Nuten (5, 6) in den Bodenplatten und der Verbindungsprofilschienen (3, 4) nicht dazu führen, dass die oberen Begrenzungsflächen (18, 19) der Verbindungsprofilschienen (3, 4) über die Oberfläche (20) der Bodenplatten (1, 2) hinausragen.

4. Fußboden nach einem der Ansprüche 1 - 3, **dadurch gekennzeichnet, dass** die aneinander anliegenden Vorsprünge (13, 14) den oberen Abschnitt des Spalts (15) zwischen den benachbart angeordneten Bodenplatten (1, 2) vollständig ausfüllen.

5. Fußboden nach einem der Ansprüche 1 - 4, **dadurch gekennzeichnet, dass** die Verbindungsprofilschienen (3, 4) durch Einkleben in die Nuten (5, 6) der Bodenplatten (1, 2) befestigt sind.

6. Fußboden nach Anspruch 5, **dadurch gekennzeichnet, dass** die Verbindungsprofilschienen (3, 4) in ihrem dem Nutboden zugewandten Flächen Ausnehmungen (21, 22) zur Aufnahme überschüssigen Klebstoffs aufweisen.

7. Fußboden nach einem der Ansprüche 1 - 6, **dadurch gekennzeichnet, dass** die Verbindungsprofilschienen (3, 4) abgerundete Konturen aufweisen, so dass die Gefahr von Kerbrissen gemindert ist.

8. Fußboden nach einem der Ansprüche 1 - 7, **dadurch gekennzeichnet, dass** die Verbindungsprofilschienen (3, 4) aus Metall, vorzugsweise aus Aluminium oder einer Aluminiumlegierung, durch Stranggießen gefertigt sind.

9. Fußboden nach einem der Ansprüche 1 - 8, **dadurch gekennzeichnet, dass** die Bodenplatten (1, 2) Multiplex-Sperrholzplatten, Kunststoffplatten oder Verbundplatten umfassen.

## Claims

1. A floor for a rail vehicle including:
a plurality of flat floor panels (1, 2), which are connected together via connecting profiled rails (3, 4) engaging in one another,
wherein a first floor panel (1) affords a horizontally extending groove (5) in a first side surface (6), in which the first connecting profiled rail (3) is fastened,
a second, adjacent floor panel (2) affords in a second side surface (8) directed towards the first side surface (7) of the first floor panel (1), a horizontally extending groove (6), in which a second connecting profiled rail (4) is fastened, **characterised in that** a substantially horizontally projecting tongue (10) on the second connecting profiled rail (4) engages into a groove (9) in the first connecting profiled rail (3), wherein the tongue (10) and the groove (9) constitute a tongue-groove snap connection and afford locking surfaces (11, 12) such that after engagement a positive connection of the locking surfaces (11, 12) opposes relative movement of the two floor panels in the horizontal and vertical directions, and
wherein provided on the upper edges of the sides directed towards one another of the connecting profiled rail (3, 4) there are projections (13, 14), which each project into a section, arranged above the tongue-groove snap connection, of a gap (15) between the adjacent floor panels (1, 2) and afford vertical abutment surfaces (16, 17), which are directed towards one another and engage one another in the connected state.

2. A floor as claimed in claim 1, **characterised in that** the projections (13, 14) afford horizontal, upper boundary surfaces (18, 19), which lie in a horizontal plane, when the floor panels (1, 2) are connected together, which lies substantially in the plane of the surfaces (20) of the floor panels (1, 2).

3. A floor as claimed in claim 2, **characterised in that** the horizontal, upper boundary surfaces (18, 19) are so arranged that, when the connecting profiled rails (3, 4) are fastened in a desired position in the base plates (1, 2), they are slightly set back with respect to the surface (20) of the floor panels (1, 2) such that deviations from the desired position as a result of tolerances in the arrangement of the grooves (5, 6) in the floor panels and in the connecting profile rails (3, 4) do not result in the upper boundary surfaces (18, 19) of the connecting profiled rails (3, 4) projecting beyond the surface (20) of the base plates (1, 2).

4. A floor as claimed in one of claims 1-3, **characterised in that** the engaging projections (13, 14) completely fill the upper section of the gap (15) between the adjacent floor panels (1, 2).

5. A floor as claimed in one of claims 1-4, **characterised in that** the connecting profiled rails (3, 4) are fastened by adhesive in the grooves (5, 6) in the floor panels (1, 2).

6. A floor as claimed in claim 5, **characterised in that** the connecting profiled rails (3, 4) afford recesses (21, 22) in their surfaces directed towards the base of the groove for receiving excess adhesive.

7. A floor as claimed in one of claims 1-6, **characterised in that** the connecting profiled rails (3, 4) have rounded contours so that the risk of impact cracks is reduced.

8. A floor as claimed in one of claims 1-7, **characterised in that** the connecting profiled rails (3, 4) are made of metal, preferably of aluminium or an aluminium alloy, by continuous casting (9).

9. A floor as claimed in one of claims 1-8, **characterised in that** the floor panels (1, 2) include multiplex plywood panels, plastic panels or composite panels.

## Revendications

1. Plancher pour véhicule sur rail comprenant
plusieurs panneaux de plancher (1, 2) plans, qui sont rendus solidaires au moyen de profilés de solidarisation (3, 4) s'emboîtant entre eux,
un premier panneau de plancher (1) comportant, sur une première surface latérale (7), une gorge (5) s'étendant horizontalement dans laquelle un premier profilé de solidarisation (3) est fixé,
un second panneau de plancher (2) voisin comportant, sur une seconde surface latérale (8) faisant face à la première surface latérale (7) du premier panneau de plancher (1), une gorge (6) s'étendant horizontalement dans laquelle un second profilé de solidarisation (4) est fixé, **caractérisé en ce que**
une languette élastique (10) du second profilé de solidarisation (4), qui fait saillie d'une manière essentiellement horizontale, s'engage dans une rainure (9) du premier profilé de solidarisation (3), la languette élastique (10) et la rainure (9) formant une solidarisation par encliquetage à rainure-languette élastique et comportant des surfaces de verrouillage (11, 12) de façon qu'après l'emboîtement, une solidarisation par complémentarité de forme des surfaces de verrouillage (11, 12) s'oppose à un déplacement relatif des deux panneaux de plancher en direction horizontale et verticale et
**en ce que**, sur les bords supérieurs des faces tournées l'une vers l'autre des profilés de solidarisation (3, 4), il est prévu des parties en saillie (13, 14) qui s'étendent chacune respectivement dans un tronçon, situé au-dessus de la solidarisation par encliquetage à rainure-languette élastique, d'une fente (15) située entre les panneaux de plancher (1, 2) disposés de manière voisine, et qui comportent des surfaces de butée (16, 17) verticales se faisant face l'une à l'autre, qui, à l'état solidarisé, sont en appui l'une sur l'autre.

2. Plancher suivant la revendication 1, **caractérisé en ce que** les parties en saillie (13, 14) comportent des surfaces limite (18, 19) supérieures horizontales qui, lorsque les panneaux de plancher (1, 2) sont solidarisés entre eux, sont situées dans un plan horizontal qui est disposé essentiellement dans le plan des surfaces supérieures (20) des panneaux de plancher (1, 2).

3. Plancher suivant la revendication 2, **caractérisé en ce que** les surfaces limite (18, 19) supérieures horizontales sont disposées de façon que, lorsque les profilés de solidarisation (3, 4) sont fixés dans une position de consigne dans les panneaux de plancher (1, 2), elles sont situées légèrement en retrait vis-à-vis de la surface supérieure (20) des panneaux de plancher (1, 2), de façon que des écarts vis-à-vis de la position de consigne, dus à des tolérances de l'agencement des gorges (5, 6) dans les panneaux de plancher et des profilés de solidarisation (3, 4), n'ont pas pour conséquence que les surfaces limite (18, 19) supérieures des profilés de solidarisation (3, 4) dépassent au-dessus de la surface supérieure (20) des panneaux de plancher (1, 2).

4. Plancher suivant l'une des revendications 1 - 3, **caractérisé en ce que** les parties en saillie (13, 14) en appui l'une sur l'autre remplissent totalement le tronçon supérieur de la fente (15) située entre les panneaux de plancher (1, 2) disposés de manière voisine.

5. Plancher suivant l'une des revendications 1 - 4, **caractérisé en ce que** les profilés de solidarisation (3, 4) sont fixés par collage dans les gorges (5, 6) des panneaux de plancher (1, 2).

6. Plancher suivant la revendication 5, **caractérisé en ce que** les profilés de solidarisation (3, 4) comportent, dans leur surface faisant face au fond de gorge, des évidements (21, 22) destinés à recevoir de la colle en excès.

7. Plancher suivant l'une des revendications 1 - 6, **caractérisé en ce que** les profilés de solidarisation (3, 4) présentent des contours arrondis, de sorte que le risque de fissures est réduit.

8. Plancher suivant l'une des revendications 1 - 7, **caractérisé en ce que** les profilés de solidarisation (3, 4) sont réalisés en métal, de préférence en aluminium ou un alliage d'aluminium, par extrusion.

9. Plancher suivant l'une des revendications 1 - 8, **caractérisé en ce que** les panneaux de plancher (1, 2) sont constitués de panneaux de contreplaqué multiple, de panneaux en matière plastique ou de panneaux composites.
